Europäisches Patentamt

European Patent Office

Office européen des brevets

(11) Veröffentlichungsnummer: **0 307 650**

**A1**

## (12) EUROPÄISCHE PATENTANMELDUNG

(21) Anmeldenummer: **88113513.1**

(22) Anmeldetag: **18.08.88**

(51) Int. Cl.⁴: **B60C 25/06**

Die Bezeichnung der Erfindung wurde geändert (Richtlinien für die Prüfung im EPA, A-III, 7.3).

(30) Priorität: **20.08.87 DE 3727817**

(43) Veröffentlichungstag der Anmeldung:
**22.03.89 Patentblatt 89/12**

(84) Benannte Vertragsstaaten:
**ES FR GB IT SE**

(71) Anmelder: **WEILNHAMMER Maschinenbau GmbH**
**Esterndorf 102**
**D-8250 Dorfen-Stadt 1(DE)**

(72) Erfinder: **Weilnhammer, August**
**- keine Strassenangabe -**
**D-8250 Dorfen(DE)**

(74) Vertreter: **Schieschke, Klaus, Dipl.-Ing. et al**
**Patentanwälte Dipl.-Ing. E. Eder Dipl.-Ing. K.**
**Schieschke Elisabethstrasse 34**
**D-8000 München 40(DE)**

(54) **Montagevorrichtung für Reifen.**

(57) Die Erfindung bezieht sich auf eine Montagevorrichtung für mindestens einen Reifen 1, dessen Reifenwulste nach außen in das Felgenhorn einer Felge 2 einlagerbar sind, mit einer Spanneinrichtung 3 für die Felge 2 und mit einer den Reifen 1 im Bereich der Reifenwulste beaufschlagenden Montagerolle 4. Diese Montagerolle 4 ist als Kegelrolle ausgebildet, welcher in Laufrichtung eine den jeweiligen Reifenwulst beaufschlagende zylindrische Rolle 5 winkelversetzt vorgeordnet ist. Die Kegelrolle 4 und die zylindrische Rolle 5 sind auf einem höhen- und seitenverstellbaren Montagewerkzeug 6 angeordnet, wobei zwischen der auf der Spanneinrichtung 3 befestigten Felge 2 und dem Montagewerkzeug 6 während der Reifenmontage eine Relativbewegung stattfindet.

Fig.1

Xerox Copy Centre

## Montagevorrichtung für mindestens einen Reifen

Die Erfindung bezieht sich auf eine Montagevorrichtung für mindestens einen Reifen, dessen Reifenwulste von Außen in das Felgenhorn einer Felge einlagerbar sind, mit einer Spanneinrichtung für die Felge und mit einer den Reifen im Bereich der Reifenwulste beaufschlagenden Montagerolle.

Als neuester Stand der Technik ist bereits ein Fahrzeugrad bekannt, bei welchem die Reifenwulste nicht, wie bisher - innen am Felgenhorn liegen sondern außen herumgreifen. Zur Montage eines derartigen Fahrzeugrades ist bereits eine Montagevorrichtung bekannt, bei welcher als Montagerolle eine prismatische Rolle Anwendung findet, welche ihrerseits angetrieben wird. Diese prismatische, angetriebene Rolle dient zum Aufrollen jeweils eines Reifenwulstes über das Felgenhorn.

Nachteilig ist bei dieser bekannten Konstruktion, daß der Reifenwulst mit innenliegendem Stahldrahtring über einen zu kurzen Abstand über das Felgenhorn gezwängt werden muß, wodurch sich ein erheblicher Kraftaufwand ergibt. Das Rad wird bei dieser bekannten Vorrichtung durch die angetriebene prismatische Rolle in eine Drehbewegung versetzt. Die gesamte Anordnung ist zudem infolge des Antriebs der prismatischen Rolle kostenaufwendig.

Der vorliegenden Erfindung liegt die Aufgabe zugrunde, eine Montagevorrichtung für die eingangs genannte Fahrzeugradart zu schaffen, welche bei einfacherem und kostensparenderem Aufbau eine schnelle Montage des Reifens auf der Felge ermöglicht.

Diese Aufgabe wird erfindungsgemäß dadurch gelöst, daß der als Kegelrolle ausgebildeten Montagerolle in Laufrichtung eine den jeweiligen Reifenwulst beaufschlagende zylindrische Rolle winkelversetzt vorgeordnet ist, daß die Kegelrolle und die zylindrische Rolle auf einem höhen- und seitenverstellbaren Montagewerkzeug angeordnet sind und daß zwischen der auf der Spanneinrichtung befestigten Felge und dem Montagewerkzeug während der Reifenmontage eine Relativbewegung vorhanden ist.

Hauptpunkt der vorliegenden Erfindung zum Montieren des vorgenannten speziellen Reifens auf der Felge ist eine in Montagerichtung der Kegelrolle vorauseilende zylindrische Rolle, welche in einem bestimmten Winkel, bzw. Abstand vor der Kegelrolle angebracht ist. Die Kegelrolle preßt hierbei den Reifenwulst radial an die Felge bzw. hinter das Felgenhorn um ein Herausgleiten zu verhindern: die zylindrische Vorlaufrolle drückt den Reifenwulst axial und reifenschonend in das Tiefbett der Felge.

Bei einer Ausführungsform der Erfindung liegt ein ruhendes, festgespanntes Fahrzeugrad ohne Drehbewegung vor, wobei um den Felgenumfang ein Montagewerkzeug von Hand oder motorisch bewegt wird. Die Kegelrolle und die zylindrische Rolle sind hierbei nicht angetrieben und rollen auf dem Reifenwulst ab.

In einer anderen Ausführungsmöglichkeit der Erfindung kann jeweils die Spanneinrichtung des Fahrzeugrades von Hand oder motorisch angetrieben werden, wobei das Montagewerkzeug in einer bestimmten Lage am Radumfang ebenfalls mit nicht angetriebener Kegelrolle und zylindrischer Rolle fest positioniert sind.

Am Montageanfang wird der Reifenwulst jeweils durch einen Exzenterspanner niedergehalten, um ein Abheben von der Felge im letzten Viertel des Montagevorganges zu verhindern.

Der notwendige radiale Anpreßdruck der Kegelrolle wird durch ein Federpaket erzeugt, wobei das Federpaket durch einen exzentrisch gelagerten Spannhebel mit Schub- oder Zugspindel vorgespannt werden kann. Bei einzelnen Ausführungsmöglichkeiten der Erfindung wird durch diese Hebelbewegung gleichzeitig der gesamte Montagekopf an dem Montagewerkzeug axial zum Fahrzeugrad geklemmt, um ein Abheben der zylindrischen Rolle zu verhindern.

Nach einer Ausfuhrungsmöglichkeit der Erfindung ist eine Mittelachsführung des Montagewerkzeuges vorhanden. Hierbei muß bei jedem Reifenwechsel der komplette Montagekopf zweimal abgehoben werden, um die Felge mit dem Mittelloch über die Achse zu führen.

Nach anderen Ausführungsmöglichkeiten der Erfindung kann das Montagewerkzeug über drehbare Ausleger oder über einen Drehkranz gelagert sein. Hierbei wird der komplette Montagekopf nur durch Federkraft oder Gegengewicht vom Reifen abgehoben. Die Radaufspannung oder eine Herausnahme ist ohne größeren Aufwand möglich.

Nach einem anderen Ausführungsbeispiel der Erfindung kann die Spanneinrichtung zum Befestigen der Felge mit einem federbelasteten Zentrierkegel mit elastischem Gegendruckring und einer mechanisch, hydraulisch oder pneumatisch bewegbaren Spannscheibe ausgebildet sein, wodurch sich eine schnelle Festspannung der Felge ergibt.

Über die Kegelrolle können auch die für die entsprechende Fahrzeugreifenart erforderlichen zusätzlichen Abdeckringe auf einfache Weise eingerollt werden, so daß sich insgesamt eine schnelle und kostensparende Montage des Fahrzeugreifens auf der Felge ergibt.

Vorteilhafte Ausbildungen sind in den Unteransprüchen angegeben.

Die Erfindung wird nachfolgend anhand von in der Zeichnung dargestellten Ausführungsbeispielen näher beschrieben.

In der Zeichnung zeigen:

Fig. 1 und 2 eine schematische Seitenansicht der Anordnung der Kegelrolle und der zylindrischen Rolle auf dem Montagewerkzeug bei abgehobener und bei angelegter Kegelrolle

Fig. 3 und 4 eine weitere konstruktive Ausgestaltung des Montagewerkzeuges bei abgehobener und angelegter Kegelrolle;

Fig. 5 eine konstruktive Durchbildung des Montagewerkzeuges in Seitenansicht, teils gebrochen;

Fig. 6 die Ausführungsform nach Fig. 5 in Draufsicht, teils gebrochen;

Fig. 7 eine Seitenansicht einer Ausführungsform der Erfindung, eine Draufsicht auf das Montagewerkzeug nach Fig. 7;

Fig. 9 und 10 zwei weitere Ausführungmöglichkeiten der Montagevorrichtung in Seitenansicht;

Fig. 11 eine weitere Ausführungsform der Montagevorrichtung in Seitenansicht;

Fig. 12 eine Draufsicht auf das Montagewerkzeug bei der Bauform nach Fig. 11;

Fig. 13 und 14 zwei weitere Ausführungsformen der Erfindung in Seitenansicht;

Fig. 15 eine weitere Ausführungsmöglichkeit der Montagevorrichtung in Seitenansicht;

Fig. 16 eine Draufsicht auf das Montagewerkzeug der Bauform nach Fig. 15;

Fig. 17 eine Draufsicht auf einen zentrischen Innenanschlag für die Spannbacken der Spanneinrichtung.

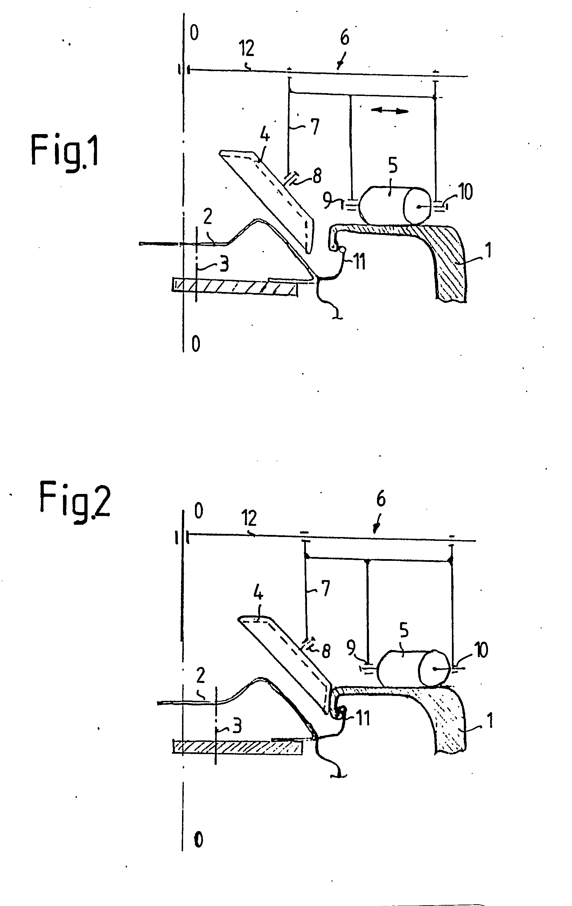

In Fig. 1 und 2 sind schematisch die wichtigsten Teile der erfindungsgemäßen Montagevorrichtung dargestellt. Hierbei besteht das Ziel der vorliegenden Erfindung darin, einen Reifen 1 mit einer Felge 2 zu verbinden, wobei die Reifenwulste mit innenliegendem Stahldrahtring über das entsprechende Felgenhorn 11 der Felge geführt werden müssen. Zunächst wird der Reifen 1 mit der eingestülpten Felge 2 auf eine Spannvorrichtung 3 der erfindungsgemäßen Montagevorrichtung aufgelegt und hier festgespannt.

Das Montagewerkzeug der erfindungsgemäßen Montagevorrichtung weist eine als Kegelrolle 4 ausgebildete Montagerolle auf, welcher in Laufrichtung eine den jeweiligen Reifenwulst beaufschlagende zylindrische Rolle 5 winkelversetzt vorgeordnet ist. Hierbei sind die Kegelrolle 4 und die zylindrische Rolle 5 auf einem Schlitten 7 angeordnet und in den Lagern 8 bzw. 9 und 10 des Schlittens 7 drehbar gelagert. Der Schlitten 7 ist über zwei Führungen auf einem Montagearm 12 dès Montagewerkzeuges 6 angeordnet. Hierbei ist der Montagearm 12 in Pfeilrichtung höhenverstellbar gegenüber der Achse 0-0, welche beispielsweise als Positionierachse 24 definiert ist und den Mittelpunkt der Felge 2 durchdringt.

Die Zustellbarkeit des Schlittens 7 und/oder die Höhenverstellbarkeit des Montagearms 12 kann durch mechanische Hebelsysteme oder durch Kolben-Zylinder-Einheiten erfolgen.

In Fig. 1 ist die Kegelrolle 4 noch nicht an den entsprechenden Reifenwulst des Reifens 1 angepreßt. Nach Fig. 2 ist der Schlitten 7 nach rechts seitlich verschoben, wobei nunmehr die Kegelrolle 4 an dem Reifenwulst des Reifens 1 anliegt und den Reifenwulst um das Felgenhorn 11 herumdrückt und damit die Montage des Reifens 1 mit der Felge 2 bewirkt. Hierbei ist, wie ersichtlich, in Montagerichtung der Kegelrolle 4 die vorauseilende zylindrische Rolle 5 von Bedeutung, welche in einem bestimmten Winkel vor der Kegelrolle angebracht ist. Die Kegelrolle preßt bei der Montage den Reifenwulst radial an die Felge 2 bzw. hinter das Felgenhorn 11, um ein Herausgleiten zu verhindern; die zylindrische Vorlaufrolle 5 drückt den Reifenwulst axial und reifenschonend in das Tiefbett der Felge 2.

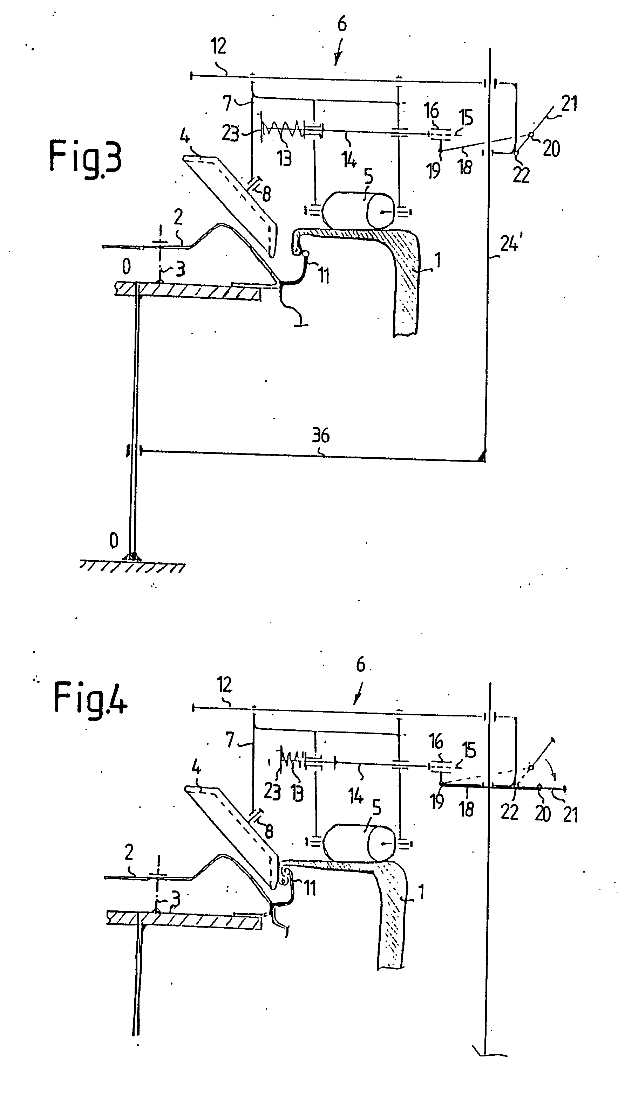

In Fig. 3 und 4 ist die schematische Darstellung der erfindungsgemäßen Montagevorrichtung näher spezifiziert: Wie ersichtlich, ist wiederum der Schlitten 7 hin- und herverschiebbar auf dem Montagearm 12 des Montagewerkzeugs 6 angeordnet, wobei dieser Schlitten 7 eine horizontale Spannstange 14 an zwei Stellen lagert. Diese Spannstange 14 geht im vorderen Bereich in eine Gewindespindel 15 über. Diese Gewindespindel 15 wirkt mit einer Mutter 16 zusammen, welche über ein Gelenk 19 mit einem Spannhebel 18 verbunden ist, der seinerseits gelenkig mit einem Handhebel 21 in Verbindung steht. Dieser Handhebel 21 ist über ein Gelenk 22 an dem Montagearm 12 befestigt.

Im vorderen Bereich ist die Spannstange 14 von einer Feder 13 umgeben, welche einerseits gegen ein Handrad 23 anliegt und andererseits ein Lager des Schlittens 7 beaufschlagt. Wird bei der Position nach Fig. 3 nun das Handrad 23 gedreht, so erfolgt über die Spannstange 14 eine Drehung der Gewindespindel 15, wodurch infolge der Gewindemutter 16 der Schlitten 7 gegenüber dem Montagearm 12 hin- oder herverschoben werden kann, entsprechend den Montageanforderungen der jeweiligen Felge 2.

Ist diese Einstellung funktionsrichtig erfolgt, so läßt sich nach Fig. 3 der Handhebel 21 in die Position nach Fig. 4 bewegen, wodurch über den Spannhebel 18 und die Spannstange 14 der Schlitten 7 insgesamt auf dem Montagearm 12 nach rechts bewegt wird, so daß sich die Kegelrolle 4 an den entsprechenden Reifenwulst des Reifens 1 anlegt. Da der Spannweg größer ist als der Abstand des Außenumfangs der Kegelrolle 4 gegen den entsprechenden Reifenwulst, wird die Feder 13 nach Fig. 4 zusammengepreßt, so daß diese in zusammengepreßten Zustand das entsprechende Gegenlager des Schlittens 7 beaufschlagt und der Schlitten 7 dann insgesamt über das Lager 9 bewirkt, daß die Kegelrolle 4 elastisch und federnd den entsprechenden Reifenwulst im Bereich des Felgenhorns 11 der Felge 2 beaufschlagt.

Diese Situation ist in Fig. 4 näher dargestellt. Wie ersichtlich ist der Montagearm 12 auf der senkrechten Positionierachse 24 heb- und senkbar, so daß nach beendeter Montage und Entspannen gemäß Figur 3 der Montagearm 12 angehoben und aus dem Wirkbereich gebracht werden kann, nachdem der Reifen 1 funktionssicher auf der Felge 2 befestigt ist.

Wie bei einem Vergleich der Fig. 3 und 4 ersichtlich, befindet sich in der Position nach Fig. 3 die Feder 13 im ungespannten Zustand, wobei erst in der Montagestellung nach Fig. 4 die Spannung der Feder 13 einen elastischen Andruck der Kegelrolle 4 an den entsprechenden Bereich der Reifenwulst des Reifens 1 bewirkt. In dieser Lage nach Fig. 4 wird das gesamte Montagewerkzeug 6 um die zentrische Achse 0-0 bewegt, so daß nach und nach der Reifenwulst des Reifens 1 hinter den entsprechenden Bereich des Felgenhorns 11 gedrückt wird.

Wie bei der Bauform nach Fig. 3 und 4 ersichtlich, ist hierbei die senkrechte Positionierachse 24′ über einen Ausleger 36 an einer entsprechenden Lagerstelle der zentrischen Achse 0-0 der Spanneinrichtung 3 befestigt.

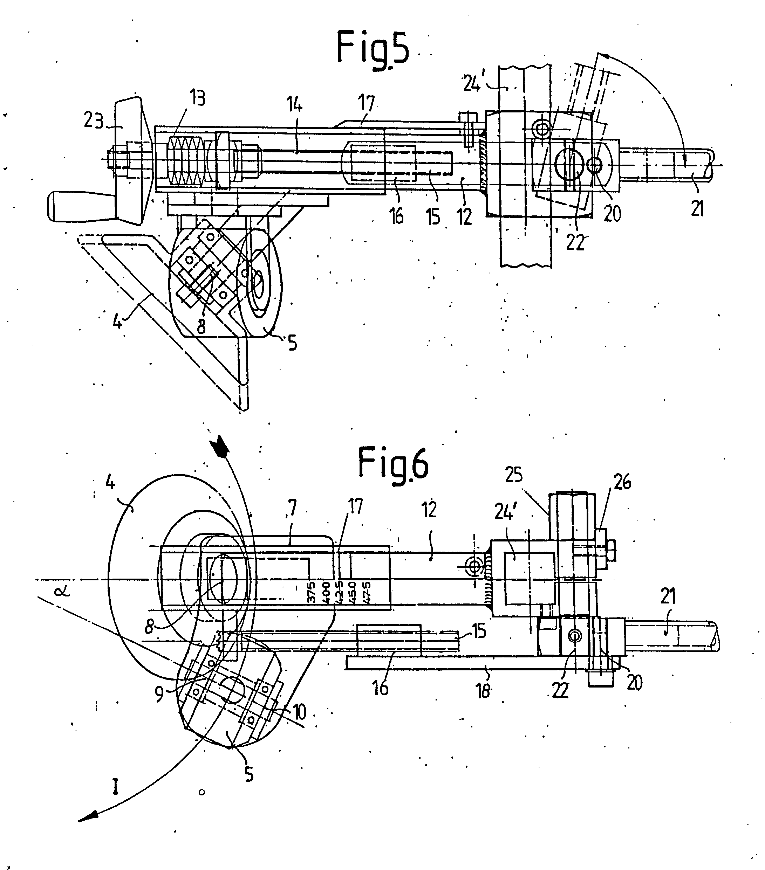

Fig. 5 und 6 zeigen die konstruktive Durchbildung des Montagewerkzeuges 6 in einem Ausführungsbeispiel. Wie ersichtlich sind die Kegelrolle 4 und die zylindrische Rolle 5 an dem Schlitten 7 befestigt, welcher nach Fig. 5 in der gleichen Ebene wie der Montagearm 12 liegt. Der Schlitten 7 lagert die Spannstange 14, welche vorderseitig die Feder 13 aufweist und von dem Handrad 23 beaufschlagt wird. Im hinteren Bereich sind die Gewindespindel 15 sowie die Gewindemutter 16 erkennbar.

Wie ersichtlich ist bei der Position nach Fig. 5 die Spannstellung analog der Position nach Fig. 4 dargestellt; der Handhebel 21 ist in die waagerechte Position geschwenkt, wobei durch dieses Schwenken im Form eines Schnellverschlusses der Montagearm 12 gleichzeitig über eine Klemm-Mutter 25 positionssicher an der senkrechten Positionierachse 24′ verklemmt ist. Gleichzeitig wurde die Kegelrolle 4 gegen den nicht näher dargestellten Reifenwulst gedrückt, wobei diese Beaufschlagung infolge des Zusammendrückens der Feder 13 elastisch erfolgt. In Fig. 6 sind die Feder 13 und das Handrad 23 nicht dargestellt.

Aus Fig. 6 ist ersichtlich, daß die Klemm-Mutter 25 an einer Seite mit einem Feststeller 26 zusammenwirkt. Durch Lösen dieses Feststellers kann die Klemm-Mutter 25 jeweils um 60° entsprechend der Außenfläche gedreht werden, wodurch auf einfache Weise eine schnelle Nachstellung zum einwandfreien Klemmen bzw. Lösen allein durch Schwenken des Handhebels 21 möglich ist.

Aus Fig. 6 ist die Anordnung der zylindrischen Rolle 5 gegenüber der Kegelrolle 4 deutlich erkennbar; es ist ersichtlich, daß die zylindrische Rolle 5 in einem Winkel ˙ gegenüber dem nicht näher dargestellten Mittelpunkt 0-0 der Felge 2 dem Kegelrad 4 vorauseilend angeordnet ist, wobei die zylindrische Rolle 5 gemäß Fig. 5 höher liegt als der Gesamtumfang der Kegelrolle 4.

Zur Feineinstellung dient die Gewindespindel 15 mit der Gewindemutter 16, wobei auf der Oberseite des Montagearms 12 eine Skala 17 angeordnet ist, welche eine funktionsrichtige Voreinstellung auf den entsprechenden Raddurchmesser gewährleistet. Die Montagerichtung ist mit dem Pfeil I in Fig. 6 dargestellt. Wie ersichtlich eilt, wie bereits vorstehend ausgeführt, die zylindrische Rolle 5 der Kegelrolle 4 voraus.

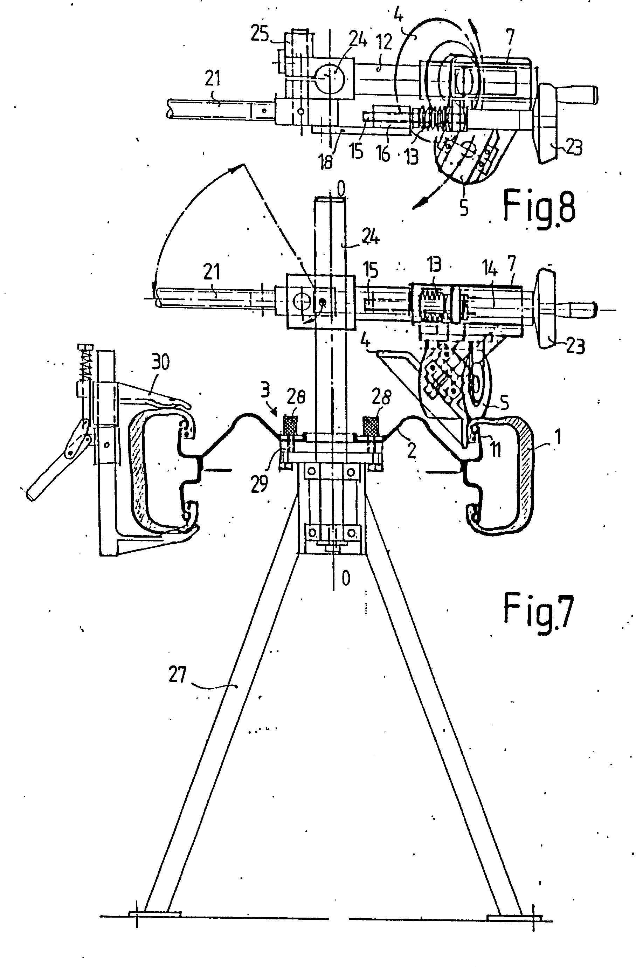

In Fig. 7 ist die gesamte Montagevorrichtung im Rahmen eines Ausführungsbeispieles dargestellt. Hier befindet sich die Positionierachse 24 im Zentrum der Felge 2, welche ihrerseits auf der Spanneinrichtung 3 angeordnet ist. Die Spanneinrichtung 3 ruht auf einem Lagergestell 27, das als Lagerbock mit mehreren Füßen ausgebildet sein kann.

Die Spanneinrichtung 3, welche beispielsweise aus mehreren Schraubbolzen 27 besteht, die in eine entsprechende Gegenplatte des Lagergestells 27 eingeschraubt sind und damit die Felge 2 während des Montagevorgangs mit dem Reifen 1 einwandfrei haltern. Hierbei besteht die Möglichkeit, daß ein Adapter 29 vorgesehen ist, entsprechend der unterschiedlichen Lochkreise der jeweils zu montierenden Felgen 2. Weiterhin ist ersichtlich, daß z.B. ein Exzenterspanner 30 vorgesehen ist, wobei am Montageanfang der Reifenwulst durch diesen Exzenterspanner 30 niedergehalten wird, um ein unerwünschtes Abheben von der Felge 2 im letzten Viertel des Montagevorganges zu verhindern. Statt des Exzenterspanners kann auch ein Niederhalter verwendet werden.

Auf der senkrechten Positionierachse 24 ist das Montagewerkzeug 6 angeordnet, welches wiederum über den Handhebel 21 und die Klemm-Mutter 25 in der funktionsrichtigen Höhe auf der senkrechten Positionierachse festgespannt werden kann, wobei gleichzeitig die Klemmrolle 4 sowie die zylindrische Rolle 5 in die Montagestellung analog der Konstruktion nach Fig. 3 und 4 verschoben werden. Vorher läßt sich jedoch noch eine Feineinstellung über das Handrad 23 und die Gewindespindel 15 sowie die Gewindemutter 16 durchführen.

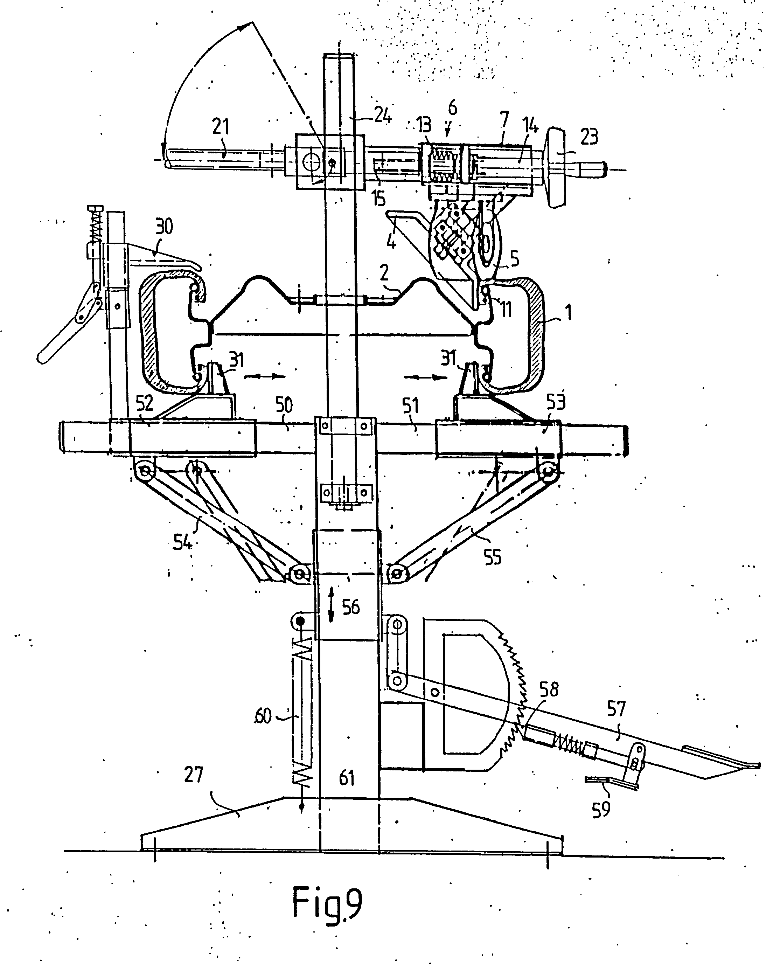

Bei der Ausführungsform nach Fig. 9 sind als Spannvorrichtung Klauen 31 vorgesehen, welche horizontal verschiebbar auf Armen 50 und 51 der Spannvorrichtung 3 angeordnet sind. Diese Klauen 31 arbeiten mit Schiebehülsen 52 und 53 zusammen, welche über Hebel 54 und 55 durch ein zentrisches Schiebeelement 56 mechanisch bewegbar sind. Dieses Schiebeelement 56 wird in einer Säule 61 geführt und läßt sich durch einen Tritthebel 57 betätigen, wobei in der gespannten Stellung über eine Klinkenanordnung 58 eine Arretierung in der Montagestellung gegeben ist. Durch Betätigung eines Gegenhebels 59 läßt sich die Klinkenanordnung 58 lösen und damit die Spannvorrichtung 3 aus der Schließstellung in die Offenstellung zurückführen, wodurch eine Verspannung der Klauen 31 gegenüber der Felge 2 nicht mehr gegeben ist. Hierzu wird eine Feder 60 entspannt, welche das Schiebeelement 56 auf seinem entsprechenden Lagerteil 61 des Gestells 27 nach unten bewegt.

Auch bei dieser Konstruktion ist die senkrechte Positionierachse 24 zentrisch zur Längsachse der Felge 2 angeordnet und trägt im oberen Bereich das Montagewerkzeug 6, welches analog der Bauform nach Fig. 5 und 6 ausgebildet ist.

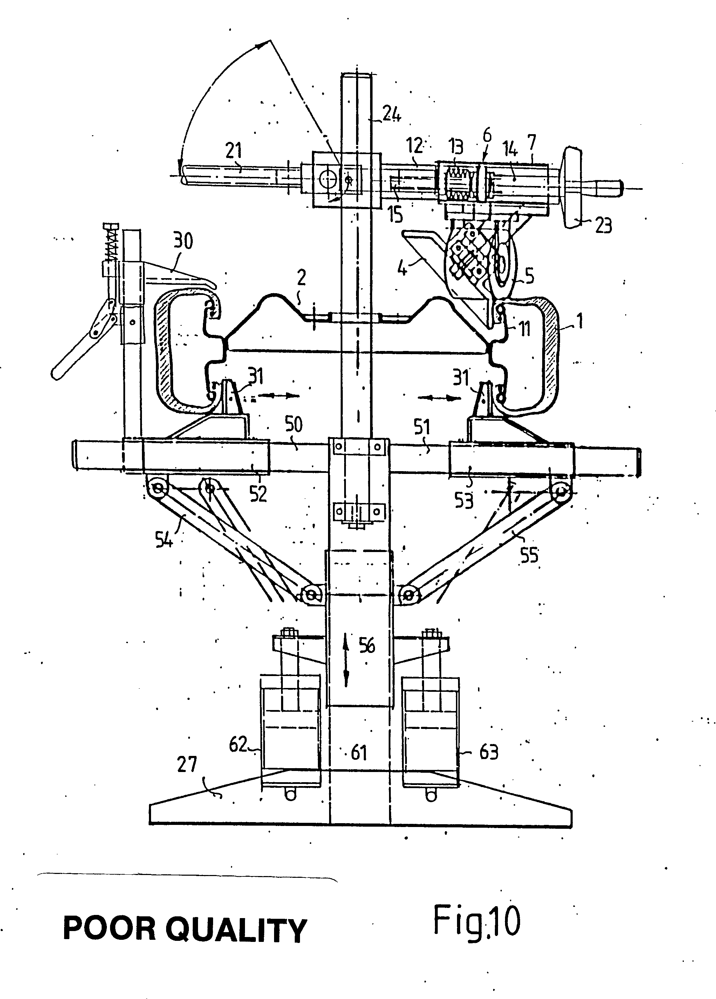

Bei der Bauform nach Fig. 10 sind wiederum Klauen 31 vorgesehen, welche über auf Armen 50 und 51 angeordnete Schiebehülsen 52 und 53 sowie Hebel 54 und 55 und ein zentrisches Schiebeelement 56 aus der Schließstellung in die Offenstellung und umgekehrt bewegt werden können. Bei dieser Konstruktion ist das Schiebeelement 56 mit zwei Kolbenzylindereinheiten 62 und 63 verbunden, welche pneumatisch oder hydraulisch betätigbar sind, wodurch die Bewegung des Schiebeelements 56 in Pfeilrichtung nach oben bzw. nach unten möglich ist. Dieses Schiebeelement 56 ist wiederum seinerseits auf der Säule 61 gelagert und über zwei nicht näher dargestellte Arme mit den Kolben der Kolbenzylindereinheit 62 und 63 verbunden. Die Zylinder der Kolbenzylindereinheiten sind im unteren Bereich an dem Lagergestell 27 angeordnet.

Zentrisch zu den Lagerteil 21 verläuft die Positionierachse 24, auf welcher das Montagewerkzeug 6 analog der Bauform nach Fig. 5 und 6 angeordnet ist.

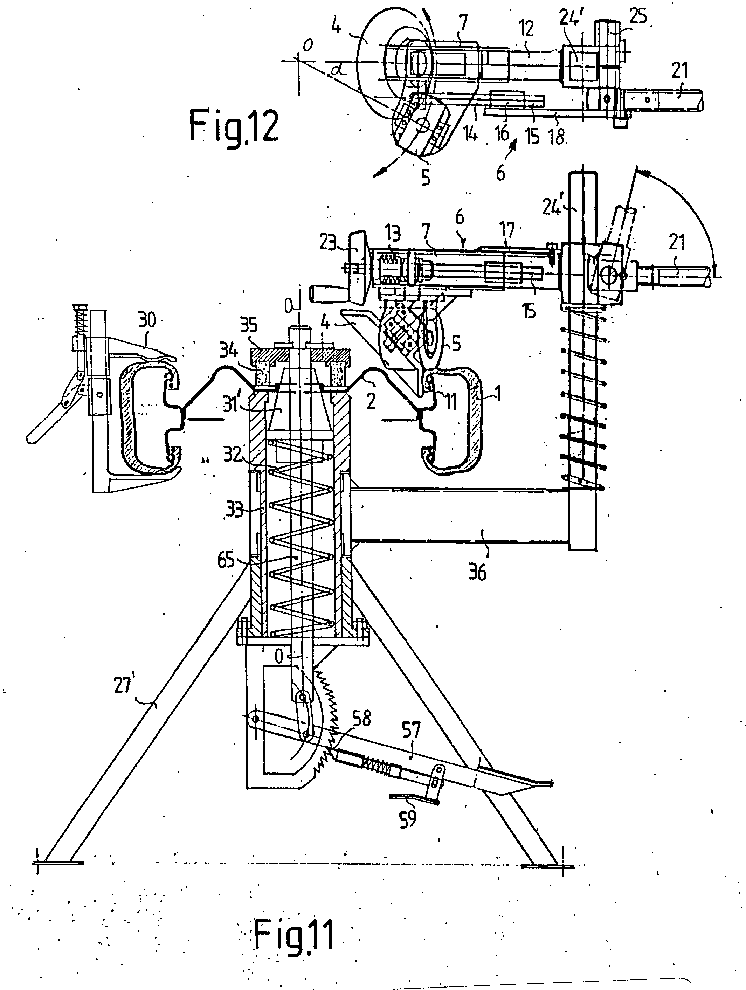

Bei der Bauform nach Fig. 11 und 12 ist die Positionierachse 24' über einen Ausleger 36 an einer Hülse 33 angeordnet. Diese Hülse 33 ist an einem Lagergestell 27' befestigt. Innerhalb der Hülse 33 befindet sich ein Zentrierkegel 31' welcher im Inneren der Hülse 33 geführt ist. Durch diesen Zentrierkegel 31' erstreckt sich eine Stange 65, welche unterseitig mit einem Tritthebel 57 über eine Klinkenanordnung 58 in Verbindung steht. Oberseitig ist die Stange 65 mit einer Spannscheibe 35 verbunden, wobei diese Spannscheibe 35 einen elastischen Gegendruckring 34 beaufschlagt. Im Inneren der Hülse 33 befindet sich darüberhinaus eine Feder 32. Wird nun der Tritthebel 57 nach unten bewegt, so wird die Stange 65 angezogen, wobei über die Spannscheibe 35 und den elastischen Gegendruckring 34 die Felge 2 auf der Spanneinrichtung 3 festgespannt wird, wobei gleichzeitig auf der Gegenseite durch die Wirkung der Feder 32 sowie des Zentrierkegels 31' eine exakte Zentrierung der Felge 2 gewährleistet ist.

Nach diesem Festspannvorgang läßt sich das Montagewerkzeug 6 mit der Kegelrolle 4 sowie der zylindrischen Rolle 5 über den Ausleger 36 um die Längsmittelachse 0-0 drehen, nachdem über die bereits beschriebene Schnellspannvorrichtung die vorgenannte Kegelrolle und die zylindrische Rolle in die Montageposition gebracht wurden.

Nach Beendigung der Montage läßt sich über den Gegenhebel 59 die Klinkenanordnung 58 lösen, wodurch der fertig auf der Felge montierte Reifen 1 abgehoben werden kann, nachdem das Montagewerkzeug 6 durch Lösen der Schnellspannvorrichtung aus seiner Arbeitsposition herausbewegt wurde.

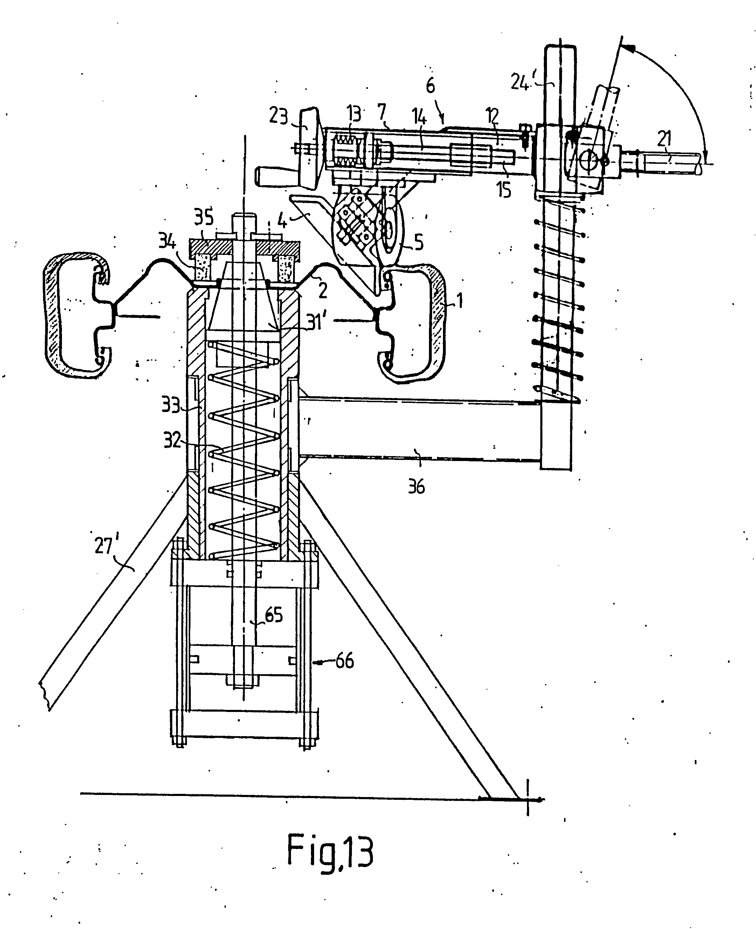

Bei der Bauform nach Fig. 13 ist wiederum als Spannvorrichtung 3 ein Zentrierkegel 31' vorgesehen, welcher im Zusammenwirken mit dem Gegendruckring 34 sowie der Spannscheibe 35 und der Feder 32 das funktionsgerechte Spannen der Felge 2 auf dem Lagergestell 27 bewirkt. Hier erfolgt die Bewegung der Stange 65 durch eine Kolbenzylindereinheit 66, wobei die Stange 65 mit dem Kolben dieser Kolbenzylindereinheit 66 verbunden ist und der Zylinder dieser Kolbenzylindereinheit zentrisch auf dem Gestell 27 lagert.

Die Hülse 33 ist wiederum mit dem Ausleger 36 verbunden, welcher oberseitig über die Positionierachse 24' das Montagewerkzeug 6 trägt.

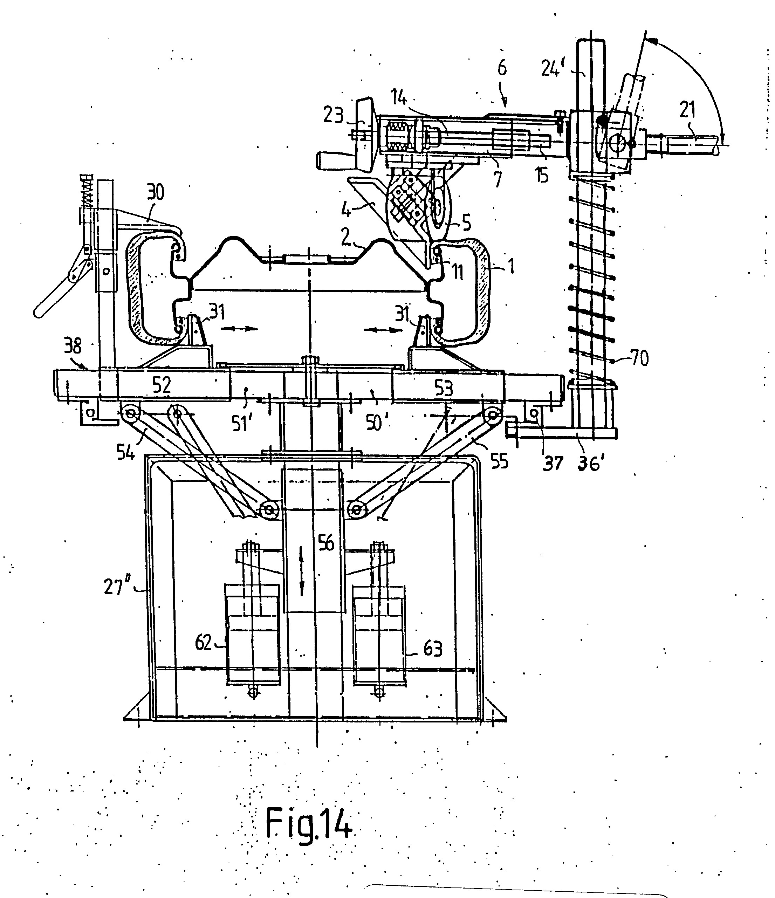

Bei der Bauform nach Fig. 14 finden wiederum Klauen 31 Anwendung, welche analog der Bauform nach Fig. 9 und 10 über ein Schiebeelement 56 bewegbar sind. Bei dieser Konstruktion weist die Spanneinrichtung einen Drehkranz 38 auf, welcher aus mehreren Armen 50' und 51' besteht, auf der die Schiebehülsen 52 und 53 angeordnet sind. Unterhalb des Drehkranzes 38 befindet sich ein Kugellagerkranz 37, welcher einerseits am Drehkranz 38 befestigt ist und andererseits über einen Ausleger 36 die Positionierachse 24' haltert. Die Betätigung des Schiebeelements 56 erfolgt hierbei analog der Konstruktion nach Fig. 10 über die beiden Kolbenzylindereinheiten 62 und 63, welche in dem Lagergestell 27'' angeordnet sind.

Das Montagewerkzeug 6 ist auf der Positionierachse 24' gegen Wirkung einer Feder 70 angeordnet, so daß nach Durchführung der Montage und Lösen des Schnellverschlusses das Montagewerkzeug 6 leicht aus seinem Eingriffsbereich herausgebracht werden kann. Beim Montagevorgang dreht das Montagewerkzeug 6 mit der Positionierachse 24′ über den Kugelkranz 37 auf dem stationären Drehkranz 38.

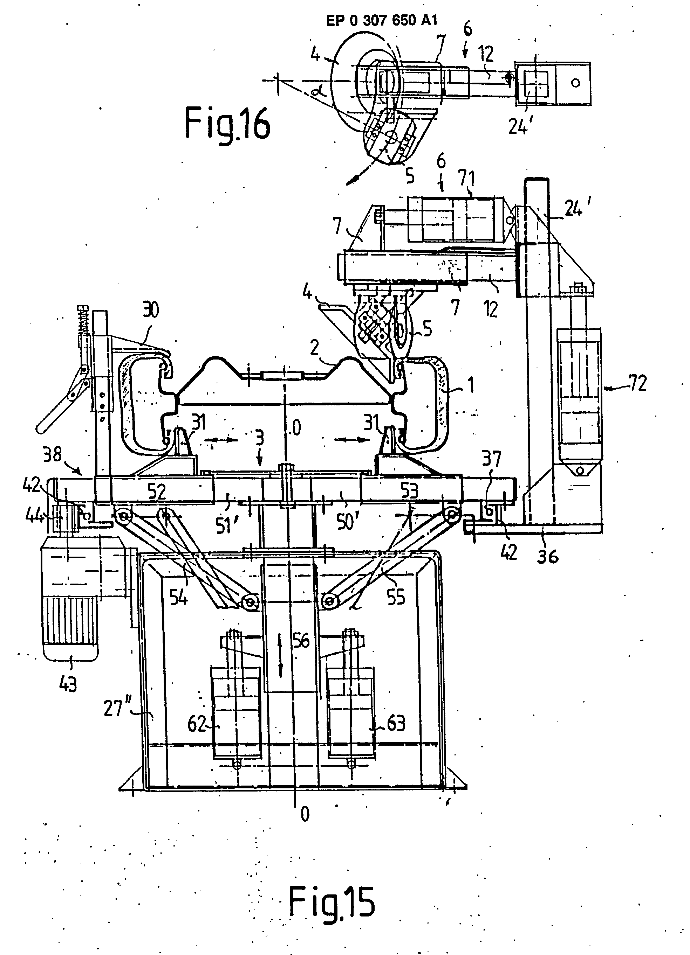

Bei der Bauform nach Fig. 15 und 16 sind die Kegelrolle 4 und die zylindrische Rolle 5 wiederum auf einem Schlitten 7 gelagert, welcher seinerseits auf dem Montagearm 12 hin- und herverschiebbar angeordnet ist. Diese Bewegung wird bei der Konstruktion nach Fig. 15 und 16 durch eine Kolbenzylindereinheit 71 bewirkt, welche einerseits am Schlitten 7 und andererseits an einem Lager des Montagearms 12 befestigt ist.

Die Höhenverstellung des Montagearms 7 kann hierbei ebenfalls über eine Kolbenzylindereinheit 72 erfolgen, welche am anderen Bereich des Montagearms 12 einerseits und im unteren Bereich der Positionierachse 24 andererseits angeordnet ist.

Bezüglich der Spannvorrichtung 3 für die Felge 2 finden wiederum Klauen 31 Anwendung, welche über Schiebehülsen 52 und 53 auf Armen 50′ und 51′ angeordnet sind und über Hebel 54 und 55 mit Hilfe eines Schiebeelements 56 angetrieben werden, das seinerseits mit Kolbenzylindereinheiten 62 und 63 analog der Bauform nach Fig. 14 verbunden ist. Unterhalb des Drehkranzes 38 befindet sich neben dem Kugellagerkranz 37 ein Zahnkranz 42, welcher mit dem Ausleger 36′ verbunden ist und durch ein Ritzel 44 mit Hilfe eines Getriebemotors 43 angetrieben wird. Hierdurch ist es möglich, die Positionierachse 24′ nicht mehr manuell sondern motorisch über den Getriebemotor 43, das Ritzel 44 sowie den Zahnkranz 42 anzutreiben, so daß sich das Montagewerkzeug 6 mit der Kegelrolle 4 und der zylindrischen Rolle 5 um die Achse 0-0 dreht und damit den Montagevorgang durchführt.

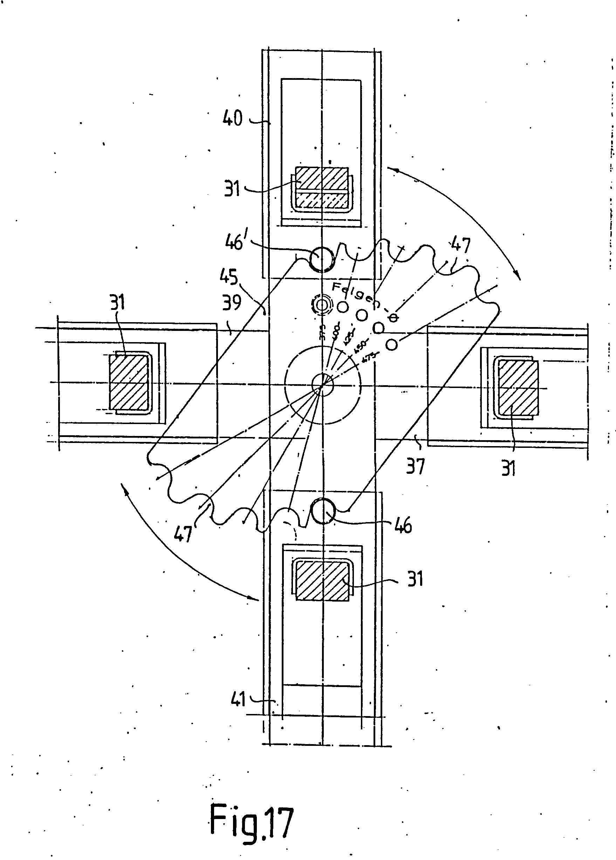

Um die Klauen 31 der Spanneinrichtung 3 funktionsrichtig auf den Felgendurchmesser abzustellen, besteht nach Fig. 17 die Möglichkeit, zwei einander gegenüberliegende Klauen 31 mit Bolzen 46 und 46′ im vorderen Bereich zu versehen, welche ihrerseits mit einem Innenanschlag 45 zusammenwirken. Dieser Innenanschlag besitzt eine Anzahl von Nuten 47, deren Weite bzw. Abstand auf den Felgendurchmesser abgestellt ist. Damit kann über diesen Innenanschlag 45 genau der Abstand erzielt werden, welcher dem Felgendurchmesser entspricht, so daß die Klauen 31 mit Hilfe des Innenanschlags 45 funktionsgerecht auf den richtigen Felgendurchmesser abgestellt werden können.

Allen Ausführungen ist gemeinsam, daß der Kegelrolle 4 eine zylindrische Rolle 5 vorauseilt, welche in einem bestimmten Winkel bzw. Abstand vor dieser Kegelrolle 4 angebracht ist. Beide Elemente rotieren um den Felgenumfang, entweder ma nuell oder motorisch bewegt, und bewirken die funktionsgerechte Montage von Reifen 1 und Felge 2.

In nicht näher dargestellter Ausführungsform ist es auch möglich, beispielsweise das Montagewerkzeug 6 stationär anzuordnen, wobei jeweils dann die Spanneinrichtung des Fahrzeugrades von Hand oder motorisch angetrieben werden muß.

## Ansprüche

1. Montagevorrichtung für mindestens einen Reifen, dessen Reifenwulste von außen in das Felgenhorn einer Felge einlagerbar sind, mit einer Spanneinrichtung für die Felge und mit einer den Reifen im Bereich der Reifenwulste beaufschlagenden Montagerolle, dadurch gekennzeichnet, daß

der als Kegelrolle (4) ausgebildeten Montagerolle in Laufrichtung eine den jeweiligen Reifenwulst beaufschlagende zylindrische Rolle (5) winkelversetzt vorgeordnet ist,

daß die Kegelrolle (4) und die zylindrische Rolle (5) auf einem höhen- und seitenverstellbaren Montagewerkzeug (6) angeordnet sind und

daß zwischen der auf der Spanneinrichtung (3) befestigten Felge (2) und dem Montagewerkzeugen (6) während der Reifenmontage eine Relativbewegung vorhanden ist.

2. Montagevorrichtung nach Anspruch 1, dadurch gekennzeichnet, daß bei feststehender Spanneinrichtung (3) das Montagewerkzeug (6) um die aufgespannte Felge (2) bewegbar ist.

3. Montagevorrichtung nach Anspruch 1 und 2, dadurch gekennzeichnet, daß das Montagewerkzeug (6) einen im Mittelpunkt (0) der aufgespannten Felge (2) gelagerten Montagearm (12) aufweist, an welchem höhen- und seitenverstellbar die Kegelrolle (4) und die zylindrische Rolle (5) angeordnet sind.

4. Montagewerkzeug nach Anspruch 3, dadurch gekennzeichnet, daß die Kegelrolle (4) und die zylindrische Rolle (15) an einem Schlitten (7) befestigt sind, daß der Schlitten (7) verschiebbar auf dem Montagearm (12) gelagert ist und daß zwischen dem Schlitten (7) und dem Montagearm (12) eine Spanneinrichtung angeordnet ist.

5. Montagevorrichtung nach Anspruch 4, dadurch gekennzeichnet, daß die Spanneinrichtung als Schnellspanneinrichtung ausgebildet ist.

6. Montagevorrichtung nach Anspruch 3 bis 5, dadurch gekennzeichnet, daß der Schlitten (7) gegenüber dem Montagearm (12) verstellbar ist.

7. Montagevorrichtung nach Anspruch 6, dadurch gekennzeichnet daß die Verstellung über eine Gewindespindel (15) und eine Spindelmutter (16) durchführbar und anhand einer Skala (17) ablesbar ist.

8. Montagevorrichtung nach einem der vorhergehenden Ansprüche, dadurch gekennzeichnet, daß der Montagearm (12) höhenverstellbar auf einer senkrechten Positionierachse (24, 24') angeordnet ist.

9. Montagevorrichtung nach einem der vorhergehenden Ansprüchen dadurch gekennzeichnet, daß der Montagearm (12) und der Schlitten (7) mit der Kegelrolle (4) und der zylindrischen Rolle (5) über ein gemeinsames Spannhebelsystem (18, 21) an der Positionierachse (24, 24') feststellbar ist.

10. Montagevorrichtung nach Anspruch 9, dadurch gekennzeichnet, daß das Spannhebelsystem (18, 21) über eine Klemm-Mutter (25) an der Positionierachse (24, 24') befestigt ist.

11. Montagevorrichtung nach Anspruch 10, dadurch gekennzeichnet daß, die Klemm-Mutter (25) jeweils um 60° verstellbar ist.

12. Montagevorrichtung nach Anspruch 8, dadurch gekennzeichnet, daß die senkrechte Positionierachse (24) zentrisch im Felgenmittelpunkt (0) angeordnet ist und der Montagearm (12) mit der Kegelrolle und der zylindrischen Rolle (5) um die Positionierachse (24) umläuft.

13. Montagevorrichtung nach Anspruch 12, dadurch gekennzeichnet, daß die Positionierachse (24) auf einem Lagergestell (27, 27') befestigt ist.

14. Montagevorrichtung nach Anspruch 13, dadurch gekennzeichnet, daß das Lagergestell (27, 27') die Spanneinrichtung (3) für die Felge (2) aufweist.

15. Montagevorrichtung nach Anspruch 14, dadurch gekennzeichnet, daß als Spanneinrichtung (3) Schraubbolzen (28) vorgesehen sind, wobei das Lagergestell (27) zur Aufnahme von Adaptern (29) für verschiedene Lochreise der Felge (2) geeignet ist (Fig. 7).

16. Montagevorrichtung nach Anspruch 14, dadurch gekennzeichnet daß als Spanneinrichtung (3) horizontal verschiebbare Klauen (31) eingesetzt sind (Fig. 9, Fig. 10, Fig. 14, Fig. 15).

17. Montagevorrichtung nach Anspruch 16, dadurch gekennzeichnet, daß die Klauen (31) mechanisch, hydraulisch oder pneumatisch bewegbar sind.

18. Montagevorrichtung nach Anspruch 14, dadurch gekennzeichnet, daß als Spanneinrichtung (3) ein federbeaufschlagter Zentrierkegel (31) mit einem elastischen Gegendruckring (34) und einer mechanische hydraulisch oder pneumatisch bewegbaren Spannscheibe (35) vorgesehen ist (Fig. 10, 11).

19. Montagevorrichtung nach Anspruch 8, dadurch gekennzeichnet, daß die senkrechte Positionierachse (24') gegenüber dem Felgenmittelpunkt (0) exzentrisch angeordnet ist.

20. Montagevorrichtung nach Anspruch 19, dadurch gekennzeichnet, daß die senkrechte Positionierachse (24') an einem im Felgenmittelpunkt (0) gelagerten drehbaren Ausleger (36) angeordnet ist (Fig. 11, Fig. 13).

21. Montagevorrichtung nach Anspruch 19, dadurch gekennzeichnet, daß die senkrechte Positionierachse (24') drehbar um den Felgenmittelpunkt (0) eines Drehkranzes (38) angeordnet ist (Fig. 14, Fig. 15).

22. Montagevorrichtung nach den Ansprüchen 16, 17 und 21, dadurch gekennzeichnet, daß Arme (39 - 41) des Drehkranzes (38) die bewegbaren Klauen (31) der Spanneinrichtung (3) lagern.

23. Montagevorrichtung nach Anspruch 21 und 22, dadurch gekennzeichnet, daß der Drehkranz (38) über mindestens ein Lager (37) mit einem durch einen Getriebemotor (43) über ein Ritzel (44) antreibbaren Zahnkranz (42) verbunden ist (Fig. 15).

24. Montagevorrichtung nach Anspruch 16 oder 22, dadurch gekennzeichnet, daß die Klauen (31) der Spanneinrichtung (3) mit einem auf den jeweiligen Felgendurchmesser einstellbaren, zentrischen Innenanschlag (45) in Verbindung stehen (Fig. 17).

25. Montagevorrichtung nach Anspruch 24, dadurch gekennzeichnet, daß zwei einander gegenüberliegende Klauen (31) jeweils ein Bolzen (46, 46') vorgeordnet ist, welcher in eine Nut (47) des Innenanschlags (45) einlagerbar ist.

26. Montagevorrichtung nach einem der vorhergehenden Ansprüche, dadurch gekennzeichnet, daß der Schlitten (7) und/oder der Montagearm (12) über eine Kolbenzylindereinheit (71, 72) bewegbar sind

27. Montagevorrichtung nach Anspruch 4, dadurch gekennzeichnet daß die Spanneinrichtung federbeaufschlagt ist

28. Montagevorrichtung nach Anspruch 1, dadurch gekennzeichnet, daß bei feststehendem Montagewerkzeug die Spanneinrichtung umläuft.

Fig.1

Fig.2

POOR QUALITY

Fig.3

Fig.4

EP 0 307 650 A1

Fig.5

Fig.6

EP 0 307 650 A1

Fig.8

Fig.7

POOR QUALITY

Fig.9

**POOR QUALITY**

Fig.10

Fig.12

Fig.11

POOR QUALITY

Fig.13

Fig.14

Fig.16

Fig.15

Fig.17

**EUROPÄISCHER RECHERCHENBERICHT**

Europäisches
Patentamt

| | EINSCHLÄGIGE DOKUMENTE | | | EP 88113513.1 |
|---|---|---|---|---|
| Kategorie | Kennzeichnung des Dokuments mit Angabe, soweit erforderlich, der maßgeblichen Teile | | Betrifft Anspruch | KLASSIFIKATION DER ANMELDUNG (Int. Cl.4) |
| A | DE - A1 - 3 438 615 (CONTINENTAL GUMMI-WERKE AG)<br><br>    * Seite 3, Zeilen 22-26; Fig. 5; Seite 9, Zeilen 22-27; Fig. 8 *<br><br>-- | | 1-3,8, 12,15, 28 | B 60 C 25/06 |
| A | EP - A2 - 0 191 367 (CONTINENTAL GUMMI-WERKE AG)<br><br>    * Zusammenfassung; Fig. 1-3,5 *<br><br>-- | | 1-3, 16,17 | |
| A | EP - A2 - 0 154 715 (GEBR. HOFFMANN GMBH & CO. KG)<br><br>    * Zeichnung *<br><br>-- | | 1,8,9, 16,17, 19,26, 28 | |
| A | EP - A1 - 0 214 323 (SCHENCK AUTO-SERVICE-GERÄTE GMBH)<br><br>    * Fig. 1 *<br><br>-- | | 1 | |
| A | GB - A - 1 593 684 (MICHELIN & CIE)<br><br>    * Fig. 1 *<br><br>-- | | 1 | |
| A | DE - A1 - 3 334 203 (CONTINENTAL GUMMI-WERKE AG)<br><br>    * Fig. 1-3 *<br><br>-- | | | |
| A | DE - A1 - 3 344 737 (GEBR. HOFFMANN GMBH & CO. KG MASCHINENFABRIK)<br><br>    * Zeichnung *<br><br>---- | | | |

| | RECHERCHIERTE SACHGEBIETE (Int. Cl.4) |
|---|---|
| | B 60 C |

Der vorliegende Recherchenbericht wurde für alle Patentansprüche erstellt.

| Recherchenort | Abschlußdatum der Recherche | Prüfer |
|---|---|---|
| WIEN | 18-11-1988 | WIDHALM |